# EUROPEAN PATENT APPLICATION

(11) **EP 3 339 510 A1**
(43) Date of publication of application: **27.06.2018**
(21) Application number: 16827298.7
(22) Date of filing: 12.07.2016
(51) Int. Cl.: E01F 9/70

(54) **ROAD SIGN EQUIPMENT**

(30) Priority: 17.07.2015 ES 201531052
(71) Applicant: Alvarez Fernandez, Emilio, 33402 Aviles-Asturias (ES)
(72) Inventor: Alvarez Fernandez, Emilio, 33402 Aviles-Asturias (ES)
(74) Representative: Garcia-Cabrerizo y del Santo, Pedro Maria
(86) International application number: PCT/ES2016/070524
(87) International publication number: WO 2017/013287

(57) **Abstract**

The invention relates to road sign equipment comprising: a reflective triangle (2) intended to act as a warning of the breakdown or obligatory stopping of a vehicle on the shoulder of a road or motorway; a movable carriage (3) into which the reflective triangle (2) is incorporated; and a remote control device (4) which enables the movement of the carriage (3) and the positioning of same at the required distance to be controlled from a distance. The remote control device (4) incorporates a radio frequency emitter that includes four control channels, for moving the carriage (3) forwards, backwards, left and right, and the carriage (3) houses a radio receiver that captures the signal from the emitter of the control device, a control circuit, motor and mechanical elements coupled to the wheels, and a power supply battery.

## Description

### INVENTION OBJECTIVE

The invention, as expressed in the wording of this descriptive report, refers to road sign equipment, which contributes to the function for which it is intended, advantages and characteristics, which shall later be described in detail, and which imply a novelty in the current state of the art.

More specifically, the objective of the invention is focussed on road sign equipment, of the type which acts as a warning of the breakdown or obligatory stopping for vehicles and which, among other innovations, has the peculiarity that the reflective triangle that it incorporates is managed and controlled from a distance, allowing the placement of this triangle in its exact point and with the required legal precision, without having to travel along the shoulder of the road or motorway, as it can be operated from a safe area or from the concerned vehicle itself, by means of a remote control device, eliminating the risk of accidents.

### FIELD OF APPLICATION OF THE INVENTION

The field of application of this invention is classified within the industrial sector dedicated to the manufacture of products and signalling devices, focussing particularly on the scope of those intended for road signs, and more specifically, those warning of the breakdown or obligatory stopping of a vehicle.

### BACKGROUND OF THE INVENTION

As is known, in the event of breakdown or obligatory stopping on the shoulder, the regulations oblige motor vehicle users to place a warning sign, a reflective triangle or two, at a certain distance from the vehicle (50 metres) so that the other road users are aware of the vehicle's presence. The problem is that, in order to place this sign, the user must walk along a stretch of the shoulder to duly place the sign and then make the same journey in the opposite direction to return to the vehicle, plus two other round trips, once the problem is solved in order to collect the sign, with the consequent risk that all this entails, even wearing the corresponding vest. Indeed, walking across roads where vehicles travel at high speed, including many trucks, entails a high risk of being run over that many fear, since mere inertia is sufficient by itself to run over a pedestrian. This is the reason why many drivers choose to abandon the signs when resuming the march, which, in turn, is again an element of risk for vehicles that travel on the road.

Moreover, added to this is the fact of having to calculate the correct distance at which the signals must be placed by eye, since average users, normally, are not used to calculating distances and the consequence is that the signals are either placed too far or too close.

The object of this invention is, therefore, to develop an improved type of warning sign that avoids these drawbacks and therefore improves the safety of road users.

In addition, with reference to the current state of the art, it should be noted, that the existence of any other sign equipment or similar invention that has technical, structural and constitutive characteristics which are similar to those presented herein, is unknown, at least by the applicant, as so it is claimed.

### EXPLANATION OF THE INVENTION

Thus, the road sign equipment proposed by the invention is configured as a remarkable innovation within its field of application, since with its implementation and in absolute terms, the aforementioned objectives are satisfactorily achieved, with the characteristic details that make it possible and that distinguish it from what is already known, duly included in the final claims that accompany this description.

Specifically, the sign equipment proposed by the invention, as previously mentioned, is designed to replace the current reflective triangles that warn of the breakdown or obligatory stopping of a vehicle on the shoulder of a road or motorway since, unlike these, is configured as equipment formed by a moveable carriage which incorporates the reflective triangle and whose movement is managed remotely by means of a remote control device that is operated from the vehicle itself, avoiding the need to walk on the road to place the triangle.

In addition, optionally, the equipment also comprises a geo-locator system that emits an informative coded signal, for example, to the assistance centre attached to and/or linked to the insurance company of the broken down car, which identifies the vehicle and its exact stopping point, greatly speeding up assistance with respect to a conventional operation, therefore reducing the time spent on the road and consequently the possibility of risk of subsequent accidents due to the occupation of the road shoulder.

Likewise, this signal can also be received, optionally, by the information panels present on motorways and certain roads, as well as transmitted to other vehicle traffic coordination centres.

The road sign equipment described therefore represents an innovation of structural and constitutive characteristics unknown until now, reasons that together with its practical utility provide it with sufficient grounds to obtain the privilege of exclusivity that is requested.

### DESCRIPTION OF THE DRAWINGS

To complement the description that is being made and in order to help to better understand the characteristics of the invention, to this descriptive report, as an integral part thereof, a plan is attached, in which the following has been represented with an illustrative and non-restrictive character:
Figure number 1.- It shows a scheme of an implementation example of the road sign equipment object of the invention, detailing the main parts and elements that comprise it.

### PREFERRED USE OF THE INVENTION

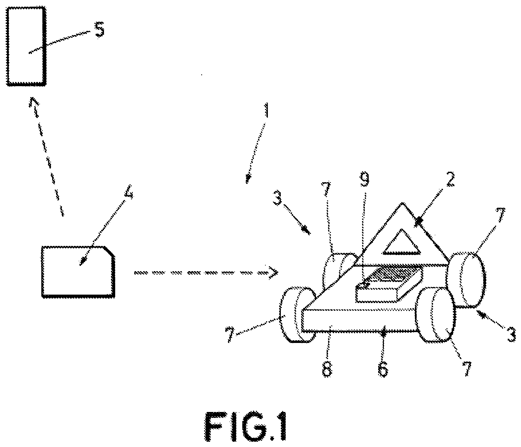

In view of the described Figure 1 and only, and in accordance with the adopted numbering, a non-limiting example of the advocated road sign equipment can be seen, which comprises the parts and elements that are indicated and described in detail below.

Thus, as seen in said Figure 1, the equipment (1) in question comprises a reflective triangle (2), of the type intended to act as a warning of the breakdown or obligatory stopping of a vehicle on the shoulder of a road or motorway, incorporated in a moveable carriage (3) and a remote control device (4) which enables the movement of the carriage (3) and the positioning of same at the required distance to be controlled from a distance.

For this, the remote control device (4) incorporates a radio frequency emitter that includes four control channels, for moving the carriage forwards, backwards, left and right, emitting signal to a distance of up to 150 meters with absolute precision and accuracy.

Optionally, the remote control device (4) incorporates a geo-locator capable connecting to one or more control centres (5) programmed by GPS and telephony, automatically emitting a signal that, for example, is instantly received by a roadside assistance system contracted through an insurance company. This signal identifies the vehicle, its owner and exact point of breakdown and stopping, being open to more information of interest. Likewise, the signal emitted, where appropriate, can be received by the information panels on motorways and dual carriageways, as well as in any convenience support.

As for the moveable carriage (3), it essentially comprises a structure (6) with wheels (7) on which the reflective triangle is coupled, properly secured, either fixed or removable, and the interior of which houses a radio receiver that captures the signal from the emitter of the control device, a control circuit, motor and mechanical elements coupled to the wheels, and a power supply battery (all of them not shown).

Preferably, the structure (6), which is the part that forms the carriage support (3), consists of a chassis (8) with four wheels (7). In the chassis (8) the aforementioned elements are placed. The chassis is constructed of semi-rigid or rigid material made of rubber, plastic or similar material, with dimensions and shape studied to optimise stability when in use and minimise space occupation when storing it in the vehicle, optionally being foldable or extensible.

Optionally, the chassis (8) or another part of the carriage (3) incorporates a programmable distance sensor (9) that can be synchronised with the guard rail or metal fence of the shoulder, to facilitate the movement of the carriage (3) from the vehicle to its destination within a stable and precise coordinate, without having to be directed from the remote control device, thus avoiding the need for the user to have expertise of such manoeuvre, although no expertise is necessary for its easy use, even though the manual control option can always be chosen for a perfect operation of quick implementation and simple use.

In any case, the chassis (8) is designed to support an approximate weight of 3 kg or more if necessary.

This chassis (8) is supported on four wheels (7) that guarantee the traction and direction of the carriage to its exact location.

As for the radio receiver, it is the component that is responsible for receiving the signal from the radio station of the remote control device, using a suitable bandwidth to receive the four channels of the emitter independently.

The control circuit is the component of the carriage that is responsible for interpreting the signals that the receiver captures in order to manage the four different signals it receives and activate every movement of the wheels. This circuit is connected to the radio receiver, the motor elements and the power supply.

The carriage's motor elements preferably consist of a direct current electric motor, and two electric actuators. The engine is responsible for providing the front/rear movements of the carriage, transmitting the power directly to the two rear or drive wheels. The traction can be transmitted directly through the drive shaft or using a gear that connects the motor shaft and the wheel axle. For its part, the two actuators are responsible for direction. Each actuator applies a movement (right/left) to the front or steering wheels. All movements are controlled by the electronic control circuit.

The power battery or batteries are responsible for providing enough energy so that the radio receiver and the motor part can work properly. Preferably, the carriage incorporates rechargeable long-life batteries, even using the vehicle's own battery.

Having sufficiently described the nature of this invention, as well as the way to put it into practice, it is not considered necessary to extend its explanation since any expert in the field will understand its scope and the advantages derived from it, stating that, within its essential nature, it may be put into practice in other implementation forms that differ in detail from that indicated as an example, and for which the protection that is sought shall apply provided that its fundamental principle is not altered, changed or modified.

## Claims

1. ROAD SIGN EQUIPMENT that consists of a reflective triangle (2) of the type intended to act as a warning of the breakdown or obligatory stopping of a vehicle on the shoulder of a road or motorway, **characterised in that** it also consists of a moveable carriage (3), where said reflective triangle (2) is incorporated, and a remote control device (4) which enables the movement of the carriage (3) and the positioning of same at the required distance to be controlled from a distance.

2. ROAD SIGN EQUIPMENT, according to Claim 1, **characterised in that** the remote control device (4) incorporates a radio frequency emitter that includes four control channels, for moving the carriage (3) forwards, backwards, left and right; and **in that** the carriage (3) houses a radio receiver that captures the signal from the emitter of the control device, a control circuit, motor and mechanical elements coupled to the wheels, and a power supply battery.

3. ROAD SIGN EQUIPMENT, according to Claim 2, **characterised in that** the emitter of the remote control device, (4) emits a signal to a distance of up to 150 meters.

4. ROAD SIGN EQUIPMENT, according to any of the Claims 1 to 3, **characterised in that** the remote control device (4) incorporates a geo-locator capable connecting to one or more control centres (5) programmed by GPS and telephone system, automatically emitting a signal that, for example, is instantly received by a roadside assistance system contracted through an insurance company and/or received by the information panels on motorways and dual carriageways, or another support.

5. ROAD SIGN EQUIPMENT, according to any of the Claims 1 to 4, **characterised in that** the moveable carriage (3) consists of a structure (6) with wheels (7) on which the reflective triangle (2) is fixedly attached.

6. ROAD SIGN EQUIPMENT, according to any of the Claims 1 to 4, **characterised in that** the moveable carriage (3) consists of a structure (6) with wheels (7) on which the reflective triangle (2) is attached as a removable.

7. ROAD SIGN EQUIPMENT, according to any of the Claims 1 to 6, **characterised in that** the moveable carriage (3) consists of a structure (7) made up of a foldable or extensible chassis (8).

8. ROAD SIGN EQUIPMENT, according to any of the Claims 1 to 6, **characterised in that** the moveable carriage (3) incorporates a programmable distance sensor (9) that is synchronised with the guard rail or metal fence of the shoulder, to facilitate the movement of the carriage to facilitate the movement of the carriage (3) within a stable and precise coordinate, without having to be directed from the remote control device.

9. ROAD SIGN EQUIPMENT, according to any of the Claims 1 to 6, **characterised in that** the moveable carriage (3) incorporates a power battery or power batteries that are rechargeable, even using the vehicle's own battery.
